# EUROPEAN PATENT APPLICATION

(11) **EP 2 474 772 A1**
(43) Date of publication of application: **11.07.2012**
(21) Application number: 12150454.2
(22) Date of filing: 09.01.2012
(51) Int. Cl.: F16L 55/38

(54) **Apparatus for pipeline inspection and method of controlling same**

(30) Priority: 10.01.2011 EP 11150531
(71) Applicant: PII Limited, Northumberland NE23 1WW (GB)
(72) Inventor: Harvey, Raymond, Cramlington, Northumberland NE23 1WW (GB); Fussell, Leon, Cramlington, Northumberland NE23 1WW (GB); Rennison, Nigel, Cramlington, Northumberland NE23 1WW (GB)
(74) Representative: McWilliams, David John

(57) **Abstract**

An in-line inspection tool has flow channel to allow pipeline fluid to flow through the tool. A valve regulates flow through the channel. The valve member is movable in a first direction for reducing the flow of fluid through the flow channel and in a second direction for increasing the flow of fluid through the flow channel. A motor is arranged for driving the valve member in the first direction. A return spring is arranged to be wound during movement of the valve member in the first direction and to unwind and drive the valve member in the second direction if the motor is switched off so as to interrupt the driving force in the first direction. An electrical circuit for the motor is configured to regulate the movement of the valve member in the second direction under the action of the spring.

## Description

The disclosure relates to apparatus for pipeline inspection, more particularly, to apparatus for inline inspection of a pipeline (e.g. an oil or gas pipeline). The disclosure further relates to a method of controlling such apparatus.

It is known to inspect the inside of a pipeline using an inspection apparatus commonly referred to as a "pipeline pig". The pig is placed inside the pipeline and a difference in pressure between upstream and downstream ends of the pig moves it downstream through the pipeline.

An example of a pipeline pig is shown in US2010/0212747. The pig has an interior channel, and a portion of the fluid (e.g. oil or gas) flowing along the pipeline is allowed to flow through the channel. The speed at which the pig travels along the pipeline can be regulated by controlling the rate of flow through the channel.

In the example of US2010/0212747, the flow rate in the channel is controlled by a flow control valve. Under normal operating conditions, a motor is used to open the valve. In particular, the speed at which the pig travels can be decreased by opening the valve.

The pig includes a safety system to ensure that the valve returns to an open condition in the event of a loss of power to the motor, e.g. in the event of on-board battery failure. In particular, a clock spring is wound by operation of the motor and is arranged to unwind and drive the valve to an open position in the event of loss of power to the motor. The speed of opening of the valve via the clock spring is regulated by a check valve and bleed plug arrangement.

There are problems inherent in the use of check valves. For example, when the motor is operational and is changing the position of the valve, the check valves must be opened to allow the valve to move. A considerable amount of torque is required to open the check valves, making them a drain on battery current.

The disclosure overcomes or mitigates the above-discussed problem, or other disadvantages or problems associated with known inspection apparatus.

According to one aspect, the disclosure provides apparatus for pipeline inspection in the form of an inspection tool for in-line inspection of a pipeline, the inspection tool comprising a flow channel for pipeline fluid to flow through the tool, and a flow control valve assembly for regulating the flow of pipeline fluid through the flow channel; the flow control valve assembly comprising a valve member, a motor and a return spring, wherein the valve member is movable in a first direction for reducing the flow of fluid through the flow channel and in a second direction for increasing the flow of fluid through the flow channel, wherein the motor is arranged for driving the valve member in the first direction, and wherein the return spring is arranged to be wound during movement of the valve member in the first direction, and is arranged to unwind and drive the valve member in the second direction when the motor is not driving the valve member in the first direction; and wherein the apparatus further comprises an electrical circuit configured to regulate the movement of the valve member in the second direction under the action of the return spring.

According to another aspect, the disclosure also provides a method of controlling an apparatus for pipeline inspection comprising the step of: providing an apparatus for pipeline inspection in the form of an inspection tool for in-line inspection of a pipeline, the inspection tool comprising a flow channel through which pipeline fluid flows through the tool, and a flow control valve assembly for regulating the flow of pipeline fluid through the flow channel; the flow control valve assembly having a valve member, a motor for driving the valve member in a first direction, a return spring for biasing the valve member in a second direction, and an electrical circuit for controlling operation of the motor;
the method further comprising the steps of: operating the motor to move the valve member in a first direction to reduce the flow of fluid through the flow channel; winding the spring during movement of the valve member in said first direction, to generate a spring force in the spring; ceasing operation of the motor in driving the valve member in the first direction; using said spring force to drive the valve member

in a second direction to increase the flow of fluid through the flow channel; and using the electrical circuit for the motor to regulate the movement of the valve member in the second direction under the action of the spring force generated in the spring by movement of the valve member in the first direction.

According to a further aspect, the disclosure provides a flow control valve assembly comprising a valve member, a motor and a return spring, wherein the valve member is movable in first and second directions, wherein the motor is arranged for driving the valve member in the first direction, and wherein the return spring is arranged for winding during movement of the valve member in the first direction and unwinding to drive the valve member in the second direction (e.g. when the motor is not acting to drive the valve member in the first direction); wherein the assembly is arranged in communication with an electrical circuit for regulating the movement of the valve member in the second direction under the action of the return spring. The valve assembly may be used for regulating the flow of pipeline fluid through a flow channel extending through part of a pipeline inspection apparatus.

In exemplary embodiments for one or more of the above aspects, the assembly further comprises a shaft arranged for rotation in a first direction of rotation upon powered operation of the motor, wherein the return spring communicates with the shaft so as to generate a spring force upon rotation of the shaft in said first direction of rotation, wherein the spring force is operable to rotate the shaft in an opposite direction of rotation when the motor is not driving the valve member in the first direction, and wherein the apparatus is configured so that rotation of the shaft in said opposite direction under influence of the spring force generates a back EMF in the motor.

In exemplary embodiments, the generated back EMF has a braking effect on the movement of the valve member in the second direction under the action of the return spring.

In exemplary embodiments, the resistance of the circuit is configured to regulate the dissipation of the generated back EMF.

In exemplary embodiments, the circuit includes the motor, a power source for supplying power to the motor and a controller for controlling the supply of power to the motor. In exemplary embodiments, the circuit is configured so that the resistance of the controller influences a braking effect on the movement of the valve member under the action of the return spring.

In exemplary embodiments for one or more of the above aspects, the flow control valve assembly may further comprise a piston mounted in a sealed chamber, wherein the motor is configured to drive the piston in said chamber, wherein the valve member is coupled for movement with said piston, and is moved in response to movement of the piston. In exemplary embodiments, the chamber is filled with a lubricant, and the piston defines one or more internal flow channels to allow lubricant to pass through the piston during movement of the piston within the chamber.

The accompanying drawings, which are incorporated in and constitute a part of the specification, illustrate one or more embodiments and, together with the description, explain these embodiments. In the drawings:
FIGURE 1 is a cross-sectional view through a pipeline inspection apparatus including a flow control valve assembly;
FIGURE 2 is a cross-sectional view of a flow control valve assembly for use in the inspection apparatus of Figure 1; and
FIGURE 3 is a schematic block diagram of an electrical circuit for use in controlling the valve assembly of Figure 2.

The following description of the exemplary embodiments refers to the accompanying drawings. The same reference numbers in different drawings identify the same or similar elements. The following detailed description does not limit the invention. Instead, the scope of the invention is defined by the appended claims.

Reference throughout the disclosure to "an exemplary embodiment," "an embodiment," or variations thereof means that a particular feature, structure, or characteristic described in connection with an embodiment is included in at least one embodiment of the subject matter disclosed. Thus, the appearance of the phrases "in an exemplary embodiment," "in an embodiment," or variations thereof in various places throughout the disclosure is not necessarily referring to the same embodiment. Further, the particular features, structures or characteristics may be combined in any suitable manner in one or more embodiments.

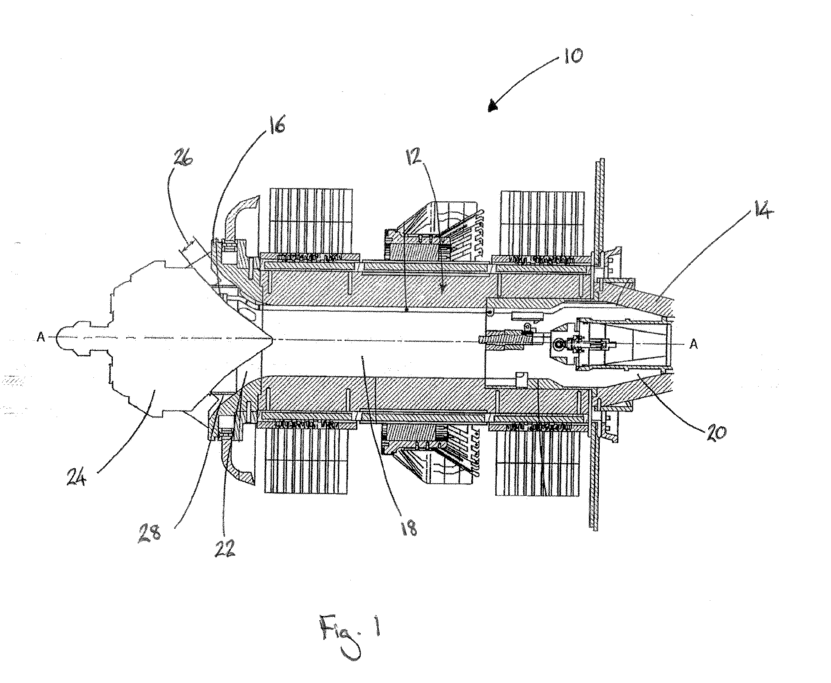

Referring firstly to Figure 1, a pipeline inspection apparatus (pig) is indicated generally at 10. The pig 10 has a body 12 which defines an upstream end 14 and a downstream end 16. The body 12 includes a fluid flow channel 18 with a longitudinal axis A, having an inlet 20 at the upstream end 14 of the body and an outlet 22 at the downstream end of the body 12.

The pig 10 includes a valve assembly 24 for controlling the flow of fluid through the pig via the channel 18. The rate of flow from the outlet 22 is varied by adjusting a flow area 26 defined between the channel 18 and the valve assembly 24.

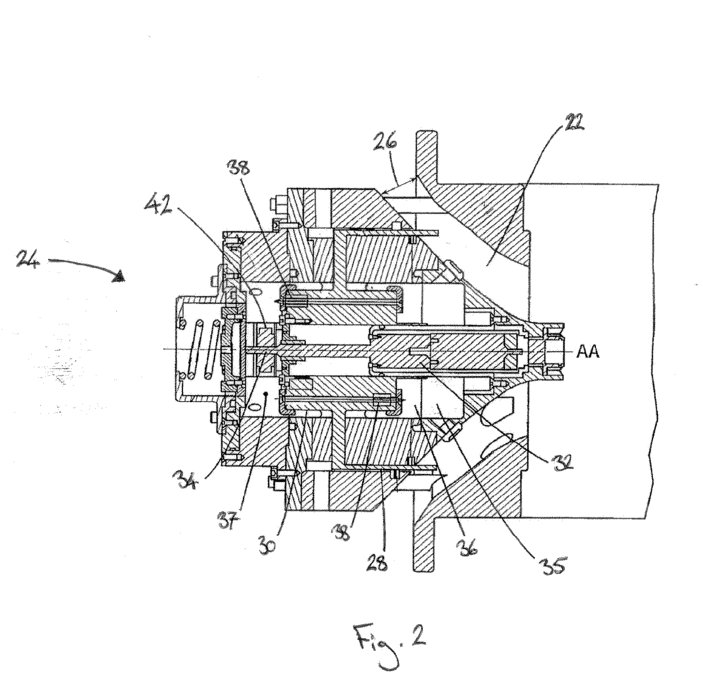

The valve assembly 24 has a valve member 28 which is movable along an axis A-A to adjust the flow area 26. The valve member 28 is movable between an upstream closed position wherein the outlet 22 is shut off, and a downstream open position wherein the outlet 22 is open and fluid may flow along the channel 18 and out through the outlet 22. The valve member 28 may be positioned at any one of a number of continuously variable positions between the open position and the closed position. Figure 2 shows the valve member 28 in a partially open position.

By changing the position of the valve member 28 (and, hence, the flow of fluid through the channel 18), it is possible to change the pressure difference between the upstream and downstream ends of the pig 10. The speed of travel of the pig 10 along a pipeline can thus be controlled by controlling the position of the valve member 28. When the valve member 28 is in a closed position (e.g. as shown in figure 1), the difference between pressure on the upstream and downstream ends of the pig 10 is maximised as the flow rate of the fluid from the outlet 22 is minimised. The speed of the pig 10 is thereby maximised. When the valve member 28 is in the open position, the difference between pressure in the upstream and downstream ends of the pig 10 is minimised as the flow rate of fluid from the outlet 22 is maximised. The speed of the pig 10 is thereby minimised.

Although shown for operation within the outlet 22 in Figures 1 and 2, the valve assembly 24 may be disposed for operation within the inlet 20. Multiple valve assemblies 24 may be provided, e.g. within the inlet 20 and the outlet 22.

The valve member 28 can be of various configurations and it is therefore understood that the disclosure broadly encompasses different shapes, sizes, orientations and/or locations of the valve member 28.

In the exemplary embodiment of Figure 2, the valve assembly 24 includes a piston 30 which is movable in a sealed chamber 35. The piston 30 divides the chamber 35 into an upstream portion 36 and a downstream portion 37. The piston 30 moves along a linear axis A-A between an upstream position and a downstream position in the chamber 35.

The valve member 28 is coupled to the piston 30 and is moved in response to movement of the piston 30. In the illustrated embodiment, when the piston 30 is in the furthest possible upstream position in the chamber 35, the valve member 28 is in its fully closed position. Similarly, when the piston 30 is in the furthest possible downstream position in the chamber 35, the valve member 28 is in its fully open position. The piston 30 may be positioned at any point between the upstream and downstream positions, allowing the valve member 28 to be variably positioned adjacent the outlet 22.

The valve assembly 24 includes a motor 32 having an output shaft (not shown) which drives a rotatable screw 34. The piston 30 is connected to the screw 34. Hence, on rotation of the screw 34, the piston 30 and the valve member 28 move linearly along axis A-A.

In this embodiment, powered rotation of the motor output shaft is configured to move the piston 30 towards the upstream portion 36 of the chamber 35 - that is, towards a closed condition. Turning the screw 34 in the opposite direction moves the piston 30 towards the downstream portion 37 (i.e. towards an open condition).

The chamber 35 is filled with a lubricant, such as a low viscosity oil, to protect the motor 32 and the screw 34 from debris or corrosion. As shown in the exemplary embodiment of Figure 2, the piston 30 defines two channels 38 running parallel to the axis A-A. The channels 38 connect the upstream portion 36 with the downstream portion 37. As the piston 30 is moved by the motor 32 from a downstream position to an upstream position, the channels 38 allow lubricant to pass from the upstream area 36 of the chamber 35 to the downstream area 37, so that movement of the piston 30 is not inhibited.

A spring 42, such as a spiral clock spring or spring motor, is provided in the valve assembly 24. The spring 42 is arranged to be wound as the piston 30 and valve member 28 are moved towards an upstream (closed) position. The spring 42 is connected to the screw 34, so that powered operation of the motor 32 to move the valve member 28 to a closed position generates a spring force in the spring 42 (i.e. the spring is wound by powered operation of the motor 32 to drive the valve member in a 'closing' direction). The spring 42 can therefore be used to move the valve member 28 to an open position if the driving force from the motor 32 is switched off.

In this embodiment, the spring 42 is positioned outside the chamber 35 and the screw 34 extends out through the chamber 35 and engages with the spring 42.

The use of the spring 42 ensures that the valve assembly 34 is configured to fail 'open', e.g. in the event of on-board battery failure. In particular, in the event of a loss of power to the motor 32, the wound clock spring 42 starts to unwind, turning the screw 34 in the opposite direction to that in which it is turned by powered operation of the motor 32. This causes the valve member 28 to be moved along axis A-A towards the downstream open position, under the unwinding action of the spring 42.

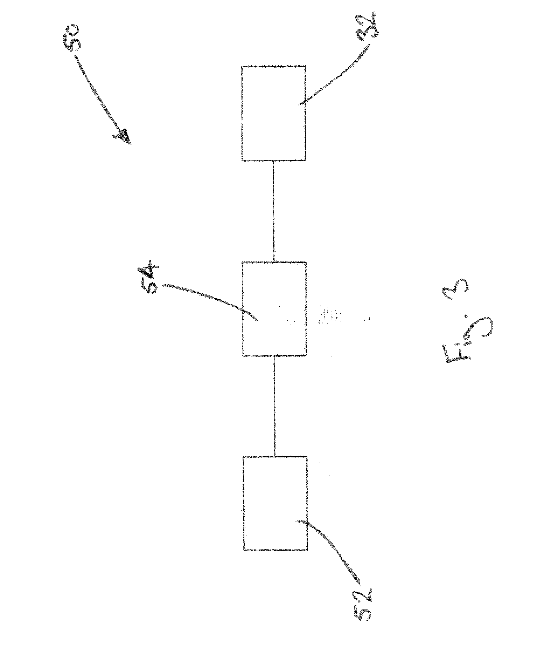

It may be desirable to use the spring 42 to cause an opening movement of the valve member under normal operating conditions. Accordingly, the motor 32 forms part of an electrical circuit 50, e.g. as shown in Figure 3. The circuit 50 includes a power source, which in this exemplary embodiment is in the form of an on-board battery 52. The circuit 50 further includes a controller 54. In use, the battery 52 is used to apply a load across the terminals of the motor 32, via the controller 54, in order to provide powered movement of the valve member 28 in the upstream (closed) direction along axis A-A. However, as described in more detail below, the circuit 50 is also configured to regulate the speed of movement of the valve member 28 toward the open position under the influence of the spring 42.

The spring force generated in the spring 42 (i.e. the force which is generated as the valve member 28 is driven towards a closed condition by the motor 32) will act to drive the valve member 28 in the opposite direction if the motor is switched off (i.e. if operation of the motor is switched from a first state in which it is driving the valve member in a closing direction to a second state in which the motor is not acting to drive the valve member in a closing direction). The connection between the spring 42 and the motor 32, via the screw 34, has a generative effect on the motor 32. In particular, the spring 42 acting to rotate the screw 34 in an opposite direction generates a back EMF in the motor 32. The circuit 50 is configured so that the generated back EMF regulates the speed of return of the valve member 28 under the action of the spring 42. In particular, the back EMF provides a braking effect on the return movement of the valve member 24. The back EMF is proportional to the speed of rotation of the motor shaft (i.e. the speed of rotation of the screw 34) when acted upon by the spring 42.

The back EMF opposes the turning force of the spring 42 and slows the movement of the valve member towards the open position. The use of the spring 42 to move the valve member to the open position reduces the load on the motor. Average power consumption is thus advantageously reduced to the ratio of 'motor off' time to 'motor on' time.

The dissipation of the back EMF is influenced by the resistance in the circuit, e.g. by the resistance of the controller 54. In exemplary embodiments, the controller 54 is in the form of a control card having a resistance of 1 ohm.

In summary, the motor is used to provide a driving force to close the valve member, and to provide a regulating effect on the return movement of the valve member under the action of the return spring. The motor is configured to switch between a first operating state, in which it applies a driving force to the valve member in the first direction (to reduce flow and thereby increase the speed of travel of the tool) and a second operative state in which no driving force is applied in the first direction, but instead a back EMF is generated in order to provide resistance to (and, hence, regulate) the return movement of the valve member (i.e. in the second direction, to increase flow and slow the speed of travel of the tool) under the action of the return spring.

The circuit 50 enables the valve assembly 24 to be configured without a check valve arrangement of the kind described in US2010/0212747. The piston 30 moves within the chamber 35 without needing to overcome the force associated with a check valve arrangement, the channels 38 providing minimal resistance to movement of the piston 30. Hence, by avoiding check valves, the power consumption of the valve assembly is significantly reduced, increasing battery life. Longer battery life means that longer pipelines can be inspected.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial difference from the literal languages of the claims.

## Claims

1. Apparatus for pipeline inspection in the form of an inspection tool for in-line inspection of a pipeline, the inspection tool comprising a flow channel for pipeline fluid to flow through the tool, and a flow control valve assembly for regulating the flow of pipeline fluid through the flow channel; the flow control valve assembly comprising a valve member, a motor and a return spring, wherein the valve member is movable in a first direction for reducing the flow of fluid through the flow channel and in a second direction for increasing the flow of fluid through the flow channel, wherein the motor is arranged for driving the valve member in the first direction, and wherein the return spring is arranged to be wound during movement of the valve member in the first direction, and is arranged to unwind and drive the valve member in the second direction when the motor is not driving the valve member in the first direction; and wherein the apparatus further comprises an electrical circuit configured to regulate the movement of the valve member in the second direction under the action of the return spring.

2. Apparatus according to claim 1, the apparatus further comprising a shaft arranged for rotation in a first direction of rotation upon powered operation of the motor, wherein the return spring is connected to said shaft so as to generate a spring force upon rotation of the shaft in said first direction of rotation, wherein the spring force is operable to rotate the shaft in an opposite direction when the motor is not driving the valve member in the first direction, and wherein the apparatus is configured so that rotation of the shaft in said opposite direction under influence of the spring force generates a back EMF in the motor.

3. Apparatus according to claim 2 wherein the resistance of the circuit is configured to regulate the dissipation of the generated back EMF.

4. Apparatus according to claim 2 wherein the circuit includes the motor, a power source for supplying power to the motor and a controller for controlling the supply of power to the motor.

5. Apparatus according to claim 4 wherein the circuit is configured so that the resistance of the controller influences a braking effect on the movement of the valve member under the action of the return spring.

6. Apparatus according to claim 1 wherein the flow control valve assembly includes a piston mounted in a sealed chamber, and the motor is configured to drive the piston in said chamber, wherein the valve member is coupled for movement with said piston, and is moved in response to movement of the piston.

7. Apparatus according to claim 6 wherein the chamber is filled with a lubricant, and the piston defines internal flow channels to allow lubricant to pass through the piston during movement of the piston within the chamber.

8. A method of controlling an apparatus for pipeline inspection comprising the step of:
providing an apparatus for pipeline inspection in the form of an inspection tool for in-line inspection of a pipeline, the inspection tool comprising a flow channel through which pipeline fluid flows through the tool, and a flow control valve assembly for regulating the flow of pipeline fluid through the flow channel; the flow control valve assembly having a valve member, a motor for driving the valve member in a first direction, a return spring for biasing the valve member in a second direction, and an electrical circuit for controlling operation of the motor;
the method further comprising the steps of:
operating the motor to move the valve member in a first direction to reduce the flow of fluid through the flow channel;
winding the spring during movement of the valve member in said first direction, to generate a spring force in the spring;
ceasing operation of the motor in driving the valve member in the first direction;
using said spring force to drive the valve member in a second direction to increase the flow of fluid through the flow channel;
and using the electrical circuit for the motor to regulate the movement of the valve member in the second direction under the action of the spring force generated in the spring by movement of the valve member in the first direction.

9. A method according to claim 8, the method including the step of applying a load across the terminals of the motor from a power source when driving the valve member in the first direction, and generating a holding torque in the motor to oppose the turning force exerted by the spring in the absence of a driving force in the first direction from the motor.

10. A method according to claim 8, wherein the apparatus further comprises a shaft arranged for rotation in a first direction of rotation upon powered operation of the motor, and the return spring is connected to said shaft, the method comprising the steps of using the motor to rotate the shaft in a first direction to drive the valve member in the first direction and generate a spring force in the return spring, and switching off power to the motor to allow the generated spring force to rotate the shaft in an opposite direction of rotation, and using back EMF generated in the motor by rotation of the shaft in the opposite direction to provide a braking effect on the movement of the valve member in the second direction under the action of the return spring.

11. A method according to claim 10 herein the electrical circuit includes the motor, a power source for supplying power to the motor and a controller for controlling the supply of power from the power source to the motor, wherein the method includes the step of configuring the circuit to provide resistance to the dissipation of back EMF generated in the motor under the action of the return spring.

12. A method according to claim 8 wherein the flow control valve assembly includes a piston mounted in a sealed chamber, the valve member is coupled for movement with said piston, and the method includes the step of using the motor to drive the piston and cause movement of the valve member in the first direction.

13. A method according to claim 12 wherein the chamber is filled with a lubricant, and the piston defines internal flow channels, wherein the lubricant passes through the piston during movement of the piston as the valve member is moved in the first direction.

14. A flow control valve assembly comprising a valve member, a motor and a return spring, wherein the valve member is movable in first and second directions, wherein the motor is arranged for driving the valve member in the first direction, and wherein the return spring is arranged to be wound during movement of the valve member in the first direction and to unwind and drive the valve member in the second direction; wherein the assembly includes an electrical circuit configured to regulate the movement of the valve member in the second direction under the action of the spring, via the motor.

15. A flow control assembly according to claim 14, further comprising a shaft arranged for rotation in a first direction of rotation upon powered operation of the motor, wherein the return spring is connected to said shaft so as to generate a spring force upon rotation of the shaft in said first direction of rotation, wherein the spring force is operable to rotate the shaft in an opposite direction when the motor is not driving the valve member in the first direction, and wherein the motor forms part of the electrical circuit such that rotation of the shaft in said opposite direction under influence of the spring force generates a back EMF in the motor.
